# EUROPEAN PATENT SPECIFICATION

(11) **EP 0 931 127 B1**
(45) Date of publication and mention of the grant of the patent: **16.01.2002**
(21) Application number: 97909314.3
(22) Date of filing: 23.09.1997
(51) Int. Cl.: C10M 149/10, C08F 8/30, C08F 297/04, C08F 287/00

(54) **DISPERSANT VISCOSITY INDEX IMPROVERS**
VISKOSITÄTSINDEXVERBESSERUNGSDISPERGIERMITTEL
AMELIORANTS DE L'INDICE DE VISCOSITE FORMANT AGENTS DE DISPERSION

(30) Priority: 24.09.1996 US 26904 P
(43) Date of publication of application: 28.07.1999
(73) Proprietor: SHELL INTERNATIONALE RESEARCH MAATSCHAPPIJ B.V., 2596 HR Den Haag (NL)
(72) Inventor: SUTHERLAND, Robert, Jude, The Woodlands, TX 77381-3105 (US)
(74) Representative: Mansell, Keith Rodney
(86) International application number: EP9705238
(87) International publication number: WO9813443

(56) References cited:
- EP-A- 0 302 239
- EP-A- 0 377 240
- WO-A-96/12746
- US-A- 4 358 565
- US-A- 5 035 820

## Description

The present invention relates to dispersant viscosity index improvers for lubricating oils, especially motor oils, to a process for producing and lubricating oil compositions and additive concentrates containing such dispersant viscosity index improvers. More particularly, the present invention relates to dispersant viscosity index improvers made from styrene/hydrogenated diene block copolymers.

Lubricating oils for use in crankcase engine oils contain components which are used to improve the viscometric performance of the engine oil, i.e. to provide for multigrade engine oils, such as SAE 5W-30, 10W-30 and 10W-40. These viscosity performance enhancers, commonly referred to as viscosity index (VI) improvers, include olefin copolymers, polymethacrylates, and styrene/hydrogenated diene block and star copolymers. These materials are often called nondispersant VI improvers because they do not help prevent varnish or sludge in the oil from depositing on the inside of an internal combustion engine.

To prevent this sludge from depositing on the engine parts, dispersants, commonly referred to as ashless dispersants, are added to the motor oil. These dispersants keep the sludge and varnish materials suspended in the oil and prevent them from forming deposits in the engine. The current industry standard test for engine cleanliness is the ASTM Sequence VE test (measuring sludge, varnish, and wear in the engine). For an ashless dispersant to be considered effective, it must allow a motor oil formulated with a nondispersant VI improver to pass this test while passing the industry standard ASTM Sequence VIA fuel economy test, as well as other tests required by the industry. Generally, the fuel economy suffers as more ashless dispersant is added to the motor oil. A dispersant VI improver can replace ashless dispersant and still maintain good engine cleanliness in the Sequence VE test. In addition, it will give better fuel economy in the Sequence VIA fuel economy test.

It is therefore an objective of the present invention to provide a lubricating oil dispersant viscosity index improver which is highly effective and able to replace a substantial amount of the ashless dispersant additive normally used in an engine oil. The present invention describes such a dispersant VI improver and a process for its preparation.

For instance, a typical crankcase engine oil composition contains about 80 to 95 percent by weight of base oil, 0.1 to 3 percent of a viscosity index improver (VII), and 5 to 20 percent of a dispersant inhibitor (DI) package which contains an ashless dispersant. Such a viscosity index improver is a non-dispersant VII. This is the reason that the ashless dispersant is required in such a composition. The active components of the DI package normally contain about 50 to 60 percent by weight (%wt) of the ashless dispersant, the balance being comprised of other ingredients such as a detergent, an anti-wear agent, an antioxidant and various other minor additives. The oil compositions using the dispersant viscosity index improvers (DVII) of the present invention will still contain about 80 to 95 percent of the base oil and preferably 0.1 to 3 percent of the dispersant viscosity index improver. The DI package will still comprise about 5 to 20 percent by weight of the crankcase oil composition. However, it will be shown below that equivalent performance to the performance of the prior art typical oil composition can be achieved with the oil composition of the present invention wherein the DI package contains 0 to 60 percent of the amount of ashless dispersant used in the DI package of the prior art typical oil composition. Thus, the present invention allows the amount of ashless dispersant to be reduced by at least 40 percent compared to the amount needed with a non-dispersant viscosity index improver, i.e. the typical oil composition described above.

The present invention provides a dispersant viscosity index improver linear diblock copolymer or radial or star block copolymer, wherein the linear diblock copolymer and each arm of the radial or star block copolymer, respectively, has an overall number average molecular weight of 7500 to 250,000 and comprises a block of conjugated diene having a number average molecular weight of 5000 to 200,000 and a block of a vinyl aromatic hydrocarbon having a number average molecular weight of 2500 to 100,000, the copolymer having a vinyl aromatic hydrocarbon content of 5 to 50 weight percent, wherein 5 to 10 N-vinyl imidazole functional groups per polymer chain have been grafted on to the copolymer.

Dispersant VI improvers based on star polymer comprising a poly(polyvinyl aromatic) nucleus bearing hydrogenated conjugated diene arms, are known from US 5,035 820. Dispersant VI improvers based on ethylene/propylene/diene polyolefins are known from WO 96/12746. There is no information in either of these documents from which can be derived that the copolymers of the present invention are effective dispersant viscosity index improvers.

If said diblocks form arms of a radial or star copolymer, the overall molecular weight of the radial or star copolymer will, of course, be much higher than that of the linear diblock copolymer.

The present invention also provides a blend of at least two different copolymers of the present invention. For example, a blend of two different such linear diblock copolymers may be used. Futhermore, it provides a blend of at least one such linear diblock copolymer and at least one radial or star block copolymer of the present invention.

The base copolymers suitable for functionalization to produce the copolymers of the present invention and thus to be used as DVII (or without functionalization as non-dispersant VII) include hydrogenated copolymers of one or more conjugated diolefins containing 4 to 12 carbon atoms and one or more monoalkenyl aromatic hydrocarbons containing 8 to about 16 carbon atoms. The base copolymer may have a linear or radial architecture or may be a mixture of such polymers. The polymers may be hydrogenated selectively, completely or partially, preferably to the extent that greater than 90% of the initial ethylenic unsaturation is removed by hydrogenation. Preferably, the hydrogenated polymers are substantially free of ethylenic unsaturation.

Selective hydrogenation refers to processes which hydrogenate a substantial portion of the ethylenic unsaturation but leave a substantial portion of the initial aromatic unsaturation unhydrogenated. As used herein, a hydrocarbon polymer substantially free of ethylenic unsaturation will be a hydrocarbon polymer containing, on average, less than about 10 carbon-carbon ethylenic double bonds per polymer chain. Polymers containing more than this amount of ethylenic unsaturation will, under certain conditions, exhibit excessive crosslinking during a functionalization reaction when the functionalization is completed in a blending apparatus capable of imparting high mechanical shear.

Useful hydrocarbon polymers include those prepared in bulk, suspension, solution or emulsion. As is well known, polymerization of monomers to produce hydrocarbon polymers may be accomplished using free-radical, cationic, and anionic initiators or other polymerization catalysts, such as transition metal catalysts used for Ziegler-Natta and metallocene type catalysts.

Lubricating oil compositions of the present invention comprise 80 to 95 %wt of one or more base oils, 0.01 to 10 %wt of the dispersant viscosity index improver copolymer of the present invention or blend thereof, and 5 to 20 %wt of a dispersant inhibitor package which comprises an ashless dispersant. The amount of ashless dispersant in the dispersant inhibitor (DI) package may be reduced as compared to the amount of ashless dispersant used in current commercial lubricating oil compositions of this type. The preferred amount of copolymer or copolymers is 0.1 to 8% wt and such compositions will normally contain 0.1 to 5 %wt. The most preferred range for use herein is 0.1 to 3 %wt because with less than 0.1 %wt, the DVII copolymer(s) will contribute too little dispersancy and with more than 3 %wt, the DVII copolymer(s) will thicken the motor oil too much to give the best viscometric properties.

Other typical components of the DI package are detergents, anti-wear agents, antioxidants, and various other minor additives. Examples of the typical components of a DI package are given in US-A-5512192 in columns 27 to 31.

As discussed above, it is an important aspect of the present invention that the presence of the dispersant viscosity index improver of the present invention permits the use of lesser amounts of ashless dispersant in the engine oil composition. Since the ashless dispersant generally has a negative effect on the fuel economy, it is a distinct advantage to be able to achieve the same level of sludge and varnish prevention while using less of the ashless dispersant. The reduction in ashless dispersant content of the formulated oil, discussed above, provides the oil formulator with the ability to use less volatile base oil mixtures due to reductions in the low-temperature, high-shear-rate viscosity (ASTM D-5293). The use of lower volatility base oils is important as volatility requirements for formulated oils are expected to become more restrictive in the future.

The block copolymers which are being functionalized in the present invention have long been used in lubricating oil compositions as non-dispersant viscosity index improvers. As referred to above, when one of these polymers is replaced by its NVI-functionalized equivalent, the amount of ashless dispersant in the DI package can be decreased by at least 40 percent depending upon the amount of DVII which is used in the oil composition. As an example, consider a typical oil composition which could contain 92 %wt oil, 1 %wt of the unfunctionalized diblock polymer described herein, and 7 %wt of a DI package which contains 57 %wt of the ashless dispersant (i.e. the total amount of ashless dispersant in the oil composition is 4 %wt). If the VII in that composition is replaced by an equivalent amount of DVII according to the present invention, then the amount of ashless dispersant in the total oil composition can be reduced to 2.4 %wt or less.

Any of the ashless dispersants which are normally used in lubricating oil compositions of this type can be used in the present invention. Typically, these ashless dispersants are relatively low molecular weight polyolefins which have been functionalized by chlorination or maleation with or without subsequent condensations being done through the succinic anhydride. Typical polyolefins used are ethylene copolymers, polybutenes and polyisobutenes having a number average molecular weight between about 500 and 5000. The succinic anhydride derivative of the polyolefin can be made from the chlorinated polyolefin or via a peroxide grafting reaction. Typical further derivitization reactions are esterification with polyhydric alcohols, such as pentaerythritol, or amidization with polyamines, such as polyethylene polyamines. Such ashless dispersants are described in detail in US-A-5512192.

Also included in these oil compositions are detergents, antioxidants, antiwear agents, rust and corrosion inhibitors, and other additives known in the art, such as are described generally in US-A-5567344.

Suitable lubricating oils are natural, mineral or synthetic lubricating oils, or mixtures thereof.

Natural lubricating oils include animal and vegetable oils, such as castor oil. Mineral oils comprise the lubricating oil fractions derived from crude oils, coal or shale, which fractions may have been subjected to certain treatments such as clay-acid, solvent, hydrogenation or catalytic dewaxing treatments, examples including aromatic oils, non-aromatic oils and naphthenic oils. Synthetic lubricating oils include synthetic polymers of hydrocarbons such as polyalphaolefins, modified alkylene oxide polymers, and esters such as polymethacrylate esters. These lubricating oils are preferably crankcase lubricating oils for spark-ignition and compression-ignition engines, but include also hydraulic lubricants, metalworking fluids and automatic transmission fluids.

Preferably the lubricating base oil component of the compositions according to the present invention is a mineral lubricating oil or a mixture of mineral lubricating oils, such as those sold by member companies of the Royal Dutch/Shell Group of Companies under the designations "HVI", or the synthetic hydrocarbon base oils sold by member companies of the Royal Dutch/Shell Group of Companies under the designation "XHVI" (trade mark).

The viscosity of the lubricating base oils present in the compositions according to the present invention may vary within wide ranges, and is generally from 3 to 35 mm²/s at 100°C.

The lubricating oil compositions of the present invention may be prepared by adding a dispersant viscosity index improver copolymer of the present invention or blend thereof to a lubricating oil. Conveniently, an additive concentrate is blended with the lubricating oil. Such a concentrate generally comprises an inert carrier fluid and one or more additives in a concentrated form. Hence the present invention also provides an additive concentrate comprising an inert carrier fluid and 10 to 80 percent by weight (active matter) of a copolymer as defined above or a blend of such copolymers, the percentages by weight being based on the total weight of the concentrate.

Examples of inert carrier fluids include hydrocarbons and mixtures of hydrocarbons with alcohols or ethers, such as methanol, ethanol, propanol, 2-butoxyethanol or methyl tert-butyl ether. For example, the carrier fluid may be an aromatic hydrocarbon solvent such as toluene, xylene, mixtures thereof or mixtures of toluene or xylene with an alcohol. Alternatively, the carrier fluid may be a mineral base oil or mixture of mineral base oils, such as those sold by member companies of the Royal Dutch/Shell Group of Companies under the designations "HVI", e.g. "HVI 60" base oil, or the synthetic hydrocarbon base oils sold by member companies of the Royal Dutch/Shell Group of Companies under the designation "XHVI" (trade mark).

The preferred diene used in the copolymers of the present invention is isoprene and the preferred vinyl aromatic hydrocarbon is styrene.

It is important that the copolymer has 5 to 10 N-vinyl imidazole (NVI) functional groups per polymer chain. Preferably, there should be an average of 7 to 8. If there are less than 5 NVI grafts per polymer chain, then the dispersant activity is insufficient to provide acceptable engine performance when formulated into an oil containing a DI package having a reduced ashless dispersant content. Since a level of 7 to 8 NVI grafts per polymer chain is high enough to provide good dispersancy, there is no need to go to the expense of grafting more than 10 NVI functional groups per polymer chain. Use of more NVI than that can cause an unacceptable level of polymer degradation and/or crosslinking because of the increased amount of peroxide grafting agent which would be necessary to add more than 10 grafts of NVI per polymer chain. If the level of degradation is too high, the rheological properties of the oil composition will be adversely affected. Thus, it is found that utilization of an average of 7 to 8 NVI grafts per polymer chain provides the best combination of cost, rheological properties, and dispersant activity in an engine oil formulated with a reduced amount of ashless dispersant.

The vinyl aromatic hydrocarbon content of these copolymers which will be functionalized in the present invention is preferably 20 to 40 %wt. The overall number average molecular weight of the linear copolymers or the arms of radial or star copolymers is preferably 70,000 to 130,000. The number average molecular weight of the diene block is preferably 40,000 to 80,000, and the number average molecular weight of the vinyl aromatic hydrocarbon block is preferably 20,000 to 50,000.

The present invention further provides a process for producing a dispersant viscosity index improver comprising grafting N-vinylimidazole on to a linear diblock copolymer, a radial or star block copolymer, or a mixture of such copolymers, wherein the or each linear diblock copolymer and each arm of the or each radial or star block copolymer, respectively, has an overall number average molecular weight of 7500 to 250,000 and comprises a block of a conjugated diene having a number average molecular weight of 5000 to 200,000 and a block of a vinyl aromatic hydrocarbon having a number average molecular weight of 2500 to 100,000, the or each copolymer having a vinyl aromatic hydrocarbon content of 5 to 50 weight percent, wherein the grafting functionalization is performed in a device capable of imparting high mechanical energy, is performed in the presence of between 0% and 15% by weight, based on the amount of base copolymer, of a diluent oil, and sufficient N-vinylimidazole is used so that 5 to 10 N-vinylimidazole functional groups per polymer chain are grafted on to the copolymer.

The minimum molecular weights of the block copolymers preferred for functionalization in the method of the present invention are limited by the molecular weight necessary for the particular copolymer to be a solid at room temperature and atmospheric pressure. Normally liquid polymers, i.e. polymers which are liquid at standard temperature and pressure do not process well in blending equipment capable of imparting high mechanical energy such as an extruder. As a result, polymers having a molecular weight sufficiently high to be solid at standard temperatures and pressures will, generally, be used in the method of the present invention. Moreover, it should be noted that chemical, thermal, and shear degradation which occurs in the blending apparatus increases with increasing molecular weight of the polymer. The amount of degradation is significantly reduced with the method of the present invention and, as a result, the method of the present invention may be practised with higher molecular weight polymers than has been practicable in the extruder processing of the prior art. Generally, however, the method of the present invention will not be used with polymers having a sufficiently large molecular weight as to result in more than about 30% degradation of the polymer during the extruder grafting process.

A non-dispersant VII may optionally be included in the oil composition of the present invention. It will generally be present in an amount equal to or less than the amount of the DVII used. The optional non-dispersant VII portion of the compositions of the present invention can be olefin copolymers, metallocene polymers, polymethacrylate, or polymers of hydrogenated dienes and/or copolymers thereof with vinyl amines, but are preferably homopolymers of hydrogenated conjugated dienes or copolymers thereof with vinyl aromatic hydrocarbons. A wide range of molecular weight polymers of the latter type can be utilized as the base polymer of the non-dispersant VII which are used in the compositions of the present invention. Polymers which are preferred as the non-dispersant VII polymer of the present invention include the hydrogenated derivatives of homopolymers and copolymers such as are described in US-A-3135716, US-A-3150209, US-A-3496154, US-A-3498960, US-A-4145298 and US-A-4238202. Polymers useful in the method of the present invention as the non-dispersant VII base polymer also include hydrogenated and selectively hydrogenated derivatives of block copolymers such as are taught, for example, in US-A-3231635, US-A-3265765, US-A-3322856 and US-A-3772196. Polymers which are acceptable as the base polymer further include hydrogenated and selectively hydrogenated derivatives of star-shaped polymers such as are taught, for example, in US-A-4033888, US-A-4077893, US-A-4141847, US-A-4391949 and US-A-4444953.

In general, number average molecular weights for the non-dispersant VII base polymer of between about 200,000 and about 3,000,000 are acceptable when the base polymer is a star-configuration hydrogenated polymer of one or more conjugated olefins or a star configuration polymer of one or more alpha olefins. For base polymers which are linear copolymers containing more than about 15 %wt of monoalkenyl arenes, number average molecular weights between about 80,000 and about 150,000 are acceptable. When the non-dispersant VII base polymer is a star configuration copolymer containing more than about 3 %wt of monoalkenyl arenes, the molecular weights are preferably between about 300,000 and about 1,500,000.

The non-dispersant VII polymers, as well as the dispersant VII copolymers, prepared with diolefins will contain ethylenic unsaturation, and such polymers will be hydrogenated. When the polymer is hydrogenated, the hydrogenation may be accomplished using any of the techniques known in the prior art. For example, the hydrogenation may be accomplished such that both ethylenic and aromatic unsaturation is converted (saturated) using methods such as those taught, for example, in US-A-3113986 and US-A-3700633, or the hydrogenation may be accomplished selectively such that a significant portion of the ethylenic unsaturation is converted while little or no aromatic unsaturation is converted as taught, for example, in US-A-3634595, US-A-3670054, US-A-3700633 and US-E-27145. Any of these methods could also be used to hydrogenate polymers which contain only ethylenic unsaturation and which are free of aromatic unsaturation.

The number average molecular weights, as used herein for all linear anionic polymers refer to the number average molecular weight as measured by Gel Permeation Chromatography (GPC) with a polystyrene standard. For star polymers, the number average molecular weights are determined by the same method or by light scattering techniques.

The molecular weights of linear polymers or unassembled linear segments of polymers such as mono-, di-, triblock, etc., or arms of radial or star polymers before coupling, are conveniently measured by GPC, where the GPC system has been appropriately calibrated. For anionically polymerized linear polymers, the polymer is essentially monodisperse (weight average molecular weight/number average molecular weight ratio approaches unity), and it is both convenient and adequately descriptive to report the "peak" (sometimes referred to as "apparent") molecular weight of the narrow molecular weight distribution observed. Usually, the peak value is between the number and the weight average. The peak (or apparent) molecular weight is the molecular weight of the main species shown on the chromatograph. For polydisperse polymers the weight average molecular weight should be calculated from the chromatograph and used. For materials to be used in the columns of the GPC, styrene-divinyl benzene gels or silica gels are commonly used and are excellent materials. Tetrahydrofuran is an excellent solvent for polymers of the type described herein. A refractive index detector may be used.

Measurement of the true molecular weight of the final coupled radial or star polymer is not as straightforward or as easy to make using GPC. This is because the radial or star shaped molecules do not separate and elute through the packed GPC columns in the same manner as do the linear polymers used for the calibration, and, hence, the time of arrival at a UV or refractive index detector is not a good indicator of the molecular weight. A good method to use for a radial or star polymer is to measure the weight average molecular weight by light scattering techniques. The sample is dissolved in a suitable solvent at a concentration less than 1.0 g of sample per 100 ml of solvent and filtered using a syringe and porous membrane filters of less than 0.5 µm pore size directly into the light scattering cell. The light scattering measurements are performed as a function of scattering angle and of polymer concentration using standard procedures. The differential refractive index (DRI) of the sample is measured at the same wavelength and in the same solvent used for the light scattering. The following references are relevant to such measurement:

### 1. Modern Size-Exclusion Liquid Chromatography,

W. W. Yau, J. J. Kirkland, D. D. Bly, John Wiley & Sons, New York, NY, 1979.

### 2. Light Scattering from Polymer Solution,

M. B. Huglin, ed., Academic Press, New York, NY, 1972.

### 3. W. Kaye and A. J. Havlik, Applied Optics, 12, 541 (1973).

### 4. M. L. McConnell, American Laboratory, 63, May, 1978.

The grafting process of the present invention is preferably carried out using neat polymer in an extruder. The polymer feed consisting of one or more polymers is introduced into the initial feed port of the extruder. Optionally, a small amount of diluent oil may be introduced with the polymer or at any other point in the extruder. The NVI is introduced into the extruder downstream of the polymer feed. The NVI may be introduced neat or in solution in some organic solvent. If additional oil is required, it can be added subsequent to the introduction of the NVI. A peroxide catalyst is then added to the extruder to initiate the grafting of the NVI on to the polymer. The peroxide may be added neat or in solution in oil. The reaction then proceeds while the materials are being heated and mixed in the extruder. There is usually a vacuum vent at the end of the extruder where unreacted materials and byproducts are removed from the polymer before it exits the extruder. After the grafted polymer exits the extruder, it is then processed for finishing activities such as dusting with antioxidants or blending with other VII polymers.

The diluent oil used in the process of the present invention may be any suitable liquid hydrocarbon. A liquid hydrocarbon will be a suitable diluent if it is compatible with polyolefin polymers but not compatible with aromatic hydrocarbon polymers. Such a diluent would tend to swell the olefin monomer portion of the polymer without affecting the aromatic hydrocarbon monomer portion of the polymer when the polymer contains an aromatic portion. The liquid hydrocarbon may be a pure compound but generally will be a blend of compounds such as would be contained in a petroleum distillate fraction. It is, however, important that the diluent remain liquid throughout the processing. It is, therefore, important that the diluent have a boiling point above the maximum temperature that will be encountered during the processing steps. Preferably, the diluent will be a neutral petroleum distillate fraction boiling generally in the fuel oil and/or lubricating oil boiling ranges. Most preferably, the diluent will have a specific gravity of about 0.9, an ASTM IBP of about 377°C (710°F) and an ASTM 90% boiling point of about 463°C (865°F). Low aromatic and non-aromatic processing oils are generally preferred. "SHELLFLEX 371" ("SHELLFLEX" is a trade mark), a processing oil available from Shell Oil Company, Houston, Texas, USA, is an example of a preferred processing oil.

The amount of N-vinylimidazole reagent actually used will, generally, exceed the amount which is desired to be grafted to the copolymer by about 10 to about 50%.

Preferably the grafting functionalization is performed in the presence of 0.05 to 0.50 wt% based on the copolymer of a free radical initiator. Any of the free radical initiators known in the prior art to be effective in a grafting reaction of the type herein contemplated can be used as the free radical initiator in the process of the present invention. Suitable free radical initiators include the various organic peroxides and hydroperoxides as well as the various organic azo compounds. Typical organic peroxides include benzoyl peroxide, t-butyl peroxypivalate, 2,4-dichlorobenzoyl peroxide, decanoylperoxide, propionyl peroxide, hydroxyheptyl peroxide, cyclohexanone peroxide, t-butylperbenzoate, dicumyl peroxide and lauroyl peroxide. Typical hydroperoxides include t-butyl hydroperoxide and 2,5-dimethyl-2,5-di(t-butylperoxy)-hexane. Typical organic azo initiators include 2,2-azobis(2-methylpropionitrile), 2,2-azobis(2-methylvaleronitrile) and 4,4'-azobis(4-cyanovaleric acid). In general, the free radical initiator will be used in a concentration within the range of about 0.05 to about 0.50 wt% based on polymer. Particularly preferred free radical initiators include di t-butylperoxide; 1,1-bis(t-butylperoxy) 3,3,5-trimethylcyclohexane; t-butyl cumyl peroxide and 2,5-dimethyl-2,5-di(t-butylperoxy) hexane.

The copolymer, diluent, N-vinylimidazole, and free radical initiator will be contacted at a temperature and pressure sufficient to ensure that both the copolymer and the N-vinylimidazole are in the liquid or molten phase when the reaction occurs. The reactants will be contacted in a blending device capable of imparting high mechanical energy such as an extruder, a Banbury mixer or a sigma blade mixer. These devices are referred to herein as extruders.

In the reaction step, it is much preferred that the reaction take place in the absence of oxygen. A nitrogen blanket is often used to accomplish this result. The reason for performing the reaction in the absence of oxygen is that the resulting additive may be more oxidatively unstable if any oxygen is present during the formation of the additive.

In general, and in the process of the present invention, the extruder temperature may range from about 160°C to about 250°C, depending upon the particular copolymer being processed, while the reaction between the copolymer and the N-vinylimidazole takes place. Variation of the temperature in the different stages of the extruder is not necessary to the method of the present invention and the temperature will therefore be maintained as nearly constant as possible as the copolymer passes through the extruder except that the temperature in the inlet zone, i.e. the zone or zones where the feed materials are introduced may, generally, be maintained somewhat below the reaction zone temperature to maximize the mixing of the free radical initiator thereby improving grafting efficiency.

The copolymer will be combined with the suitable diluent first as the copolymer passes through the blending apparatus. Introduction of the diluent into the extruder before the N-vinylimidazole or the free radical initiator serves to reduce the amount of scission or degradation of the polymer that would otherwise occur as described in US-A-5073600.

As the copolymer feed and diluent continue through the extruder, they are next contacted either with the N-vinylimidazole or a free radical initiator. Addition of the N-vinylimidazole prior to addition of the free radical initiator is preferred since, as described in US-A-5073600, prior addition of the free radical initiator will, generally, result in an increased amount of crosslinked or coupled polymer in the product recovered from the blending apparatus. N-vinylimidazole can be fed to the blending apparatus as a liquid or as a solution in a suitable solvent. The temperature in the blending apparatus at the point at which the N-vinylimidazole is introduced is not critical to the product of the present invention. For reasons more fully explained below, the polymer will, preferably, be at a temperature below about 210°C when the N-vinylimidazole is introduced.

As the polymer, diluent and the N-vinylimidazole continue to move through the blending apparatus, the blend is next contacted with a free radical initiator. The free radical initiator may be fed to the blending apparatus neat or as a solution. Most of the free radical initiators contemplated for use in the process of the present invention are normally liquid and will, generally, be introduced into the extruder in this state. As is well known in the prior art, free radical initiators such as those contemplated for use herein generally have a very short half life at elevated temperatures and frequently even decompose at temperatures within the range of those contemplated for use herein. As a result, it is important to introduce the free radical initiator into the blending apparatus at as low a temperature as reasonably practicable and then relatively quickly thereafter bring the temperature of the entire blend up to the desired reaction temperature so as to ensure maximum efficiency during the grafting reaction. In this regard, maximum reaction efficiency is generally realised when the temperature of the blend with which the free radical initiator is initially contacted is within the range of about 160°C to about 210°C. As a result, and as indicated supra, the initial stages of the blending apparatus will be maintained at a temperature within this range so as to ensure maximum reaction efficiency. The temperature will, however, be raised to the desired reaction temperature as quickly after the free radical initiator is added as is practicable.

The effluent from the reaction zone will contain unreacted N-vinylimidazole when the grafting reaction does not proceed to completion. Because the N-vinylimidazole may be detrimental to a lubricating oil viscosity index improver if allowed to remain in the polymer product in an ungrafted state, at least a portion of the unreacted compound should be separated from the polymer product prior to use. Any of the conventional techniques known in the prior art such as stripping and extraction may be used. Frequently, however, a portion of the unreacted N-vinylimidazole may be separated from the graft reaction zone effluent simply by vacuum venting the effluent after the grafting reaction is completed. The vapour will contain, in addition to unreacted N-vinylimidazole, free radical initiator decomposition products formed as a result of, for example, degradation. In general, vacuum venting of the grafting reactor effluent will remove about 20 to about 80% of the unreacted N-vinylimidizole contained in the effluent. The temperature in the zone where the effluent is vented could, of course, be increased to increase the vapour pressure of the components to be vented.

The process of making the polymer of the present invention has the desirable feature of being operable in standard polymer handling equipment. Further, the residence time of the process is only about 15 seconds to about 3 minutes. This is a distinct advantage over prior art solution functionalization. The product of the present process therefore has a narrower molecular weight distribution than products of prior art solution functionalization methods. The narrower molecular weight distribution minimizes the rate of degradation of the polymer in lubricating oil service, and therefore maximizes the retention of the "thickening" effect of the polymer. This advantage is evidenced by lower shear loss or DIN (ASTM D-3945) loss. The product of the present process also has excellent viscosity index improving properties and excellent dispersant characteristics.

The present invention will be further understood from the following illustrative Examples.

### Examples

In Examples 1-4 a linear diblock copolymer was extruded in a Berstorff ZE-40A twin screw, co-rotating, fully intermeshing, fully self-wiping extruder at a rate of 36 kg/hr (80 lbs/hr). The copolymer used was a polystyrene - hydrogenated polyisoprene diblock copolymer containing about 37 %wt polystyrene and having a total molecular weight of about 97,000. The polyisoprene block was hydrogenated to remove greater than 98% of its original ethylenic unsaturation. This is referred to as Polymer A.

### Example 1

The block copolymer was fed into the extruder and conveyed at 36 kg/hr (80 lbs/hr). The first injector port was used to inject a mixture of 67.5 %wt N-vinylimidazole (NVI) and 32.5 %wt acetone at a rate of 13.6 ml/min. The second injector port was used to inject the peroxide, 2,5-dimethyl-2,5-di(t-butylperoxy)-hexane, 25 %wt in Penrico oil, at a rate of 240 ml/hr. The copolymer melt then passed a vacuum port operated at a pressure of 6.5 kPa (26 inches of water) prior to exiting the die plate and being underwater pelletized, dewatered, spin dried, and packaged. The copolymer in this example contained 2400 ppm of nitrogen which was bound to the polymer.

### Example 2

This example was run as Example 1 but with the following feed rates: polymer 36 kg/hr (80 lbs/hr), NVI/acetone 5.4 ml/min, peroxide/oil 240 ml/hr. The Example 2 polymer had a bound nitrogen content of 900 ppm.

### Example 3

This example was run as Example 1 but with the following feed rates: polymer 36 kg/hr (80 lbs/hr), NVI/acetone 13.6 ml/min, peroxide(t-amylperoxide)/oil 240 ml/hr. The Example 3 polymer had a bound nitrogen content of 1900 ppm.

### Example 4

This example was run as Example 1 but with the following feed rates: polymer 36 kg/hr (80 lbs/hr), NVI/acetone 23.6 ml/min, peroxide(t-amylperoxide)/oil at 400 ml/hr. The Example 4 polymer had a bound nitrogen content of 4700 ppm.

The polymers from Examples 1-4 as well as the ungrafted diblock copolymer precursor were blended to SAE 15W-40 fully formulated engine oils for testing. The formulation for these oils was the following.

| Ingredient | Conc, %wt | Conc, %wt | Supplier |
|---|---|---|---|
| SHELL 100N Oil | 44.8 | 45.0 | Shell |
| SHELL 250N Oil | 39.0 | 39.0 | Shell |
| ECA 11039 | 0.2 | 0.2 | Exxon |
| AC-60-C | 0.5 | 0.5 | Shell |
| HITEC 1230 | 14.4 | 14.4 | Ethyl |
| NVI-grafted DVII | 1.1 | | |
| Non-grafted VII | | 0.9 | |

("SHELL" is a trade mark)
ECA 11039 is a polymethacrylate type pour point depressant. AC-60-C is an overbased calcium salicylate type detergent. HITEC 1230 is a proprietary DI package.

Rheological properties were tested with the following industry standard tests. KV is the kinematic viscosity (mm²/s), at 100 °C measured by ASTM D445. CCS is the Cold Cranking Simulator high shear viscosity (mPa.s), measured by ASTM D5293 at the low temperature specified for the particular grade of the oil. MRV is the Mini-Rotary Viscometer low temperature, low shear viscosity (mPa.s), measured by ASTM D4684. The Orbahn Test measures the permanent loss of KV when the oil is sheared in a diesel injector rig according to

### ASTM D3945.

Results of these rheological measurements are given in Table 1. Results show that all four of the NVI-grafted polymers give good 15W/40 oils. All five oils were thickened to a KV of about 14.3mm²/s. At the same KV, all four of the NVI-grafted polymers give better low temperature viscosities but they give slightly more shear degradation in the Orbahn Test.

An industry standard engine test to measure rollerfollower wear, the General Motors 6.2L test, was run on oils containing each of the five polymers. Results given in Table 1 show that all four of the NVI-grafted polymers give oils which show less wear than the oil based on the unfunctionalized VII.

Thus, all of the NVI-grafted polymers give better low temperature rheological properties and less engine wear than the ungrafted polymer.

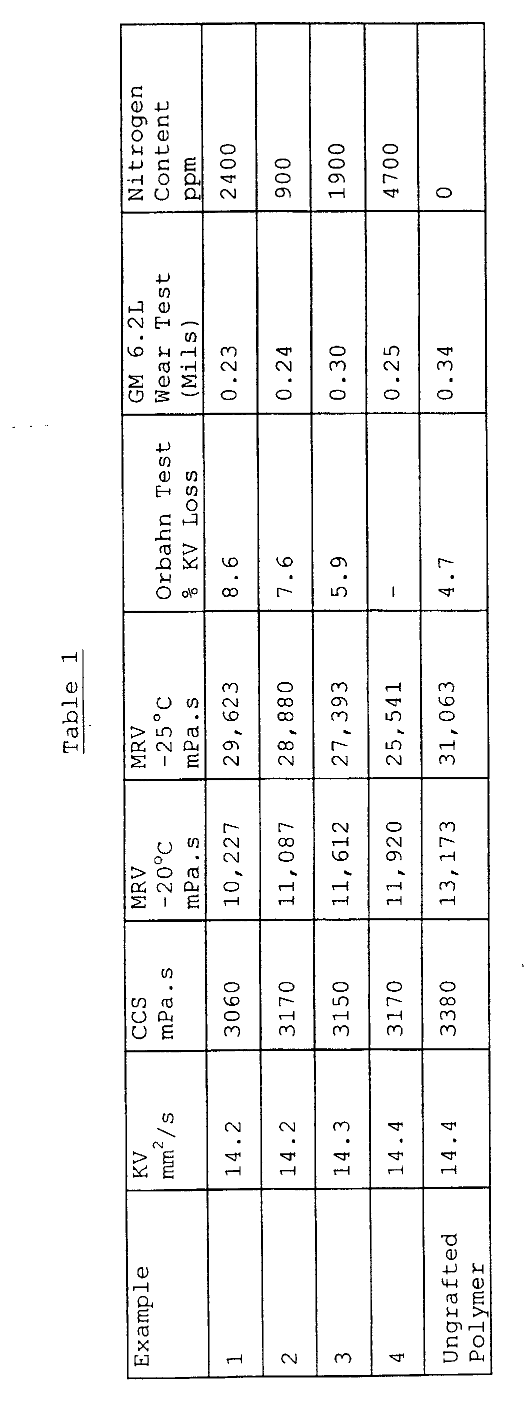

Examples 5 and 6 used a polymer feed composed of the same polystyrene/hydrogenated polyisoprene diblock Polymer A and a co-feed of another polystyrene/hydrogenated polyisoprene diblock copolymer that contained about 10 %wt tapered polystyrene and that had a molecular weight of 225,000. This second polymer is referred to as Polymer B.

### Example 5

This polymer was prepared by the same method and at the same feed rates as Example 1 but with a polymer blend of 75 %wt Polymer A and 25 %wt Polymer B. This Example 5 polymer had a bound nitrogen content of 1950 ppm.

### Example 6

This polymer was prepared by the same method and at the same feed rates as Example 5 but with a blend of 90 %wt Polymer A and 10 %wt Polymer B. This Example 6 polymer had a bound nitrogen content of 1250 ppm.

Examples 7 and 8 used a polymer feed composed of the same polystyrene/hydrogenated polyisoprene diblock Polymer A and a co-feed of a radial polystyrene/hydrogenated polyisoprene polymer, referred to as Polymer C. The arms on Polymer C were polystyrene/hydrogenated polyisoprene diblock polymers containing about 6%wt polystyrene and having a total molecular weight of each arm of about 55,000. About 20 of these diblock arms were coupled together to form Polymer C.

### Example 7

This polymer was prepared by the same method as Example 1 but with a polymer blend of 75%wt of Polymer A and 25%w of Polymer C and injecting neat NVI at a rate of 9.1 ml/min. This Example 7 polymer had a bound nitrogen content of 1910 ppm.

### Example 8

This polymer was prepared by the same method and at the same injection rates as Example 7 except with a polymer blend of 60%wt Polymer A and 40%w of Polymer C. This Example 8 polymer had a bound nitrogen content of 1850 ppm.

### Example 9

Use of a dispersant VII should allow preparation of motor oils containing less of the ashless dispersant than is required in oils containing a non-dispersant VII. This example demonstrates that, when replacing Polymer A with the NVI-grafted version of Polymer A from Example 1, at least 40 %wt of the ashless dispersant required for use with Polymer A can be removed from the motor oil formulation and still maintain acceptable engine cleanliness.

The motor oil formulation for this experiment used Chevron 100N and 240N base oils and a proprietary DI package from Ethyl containing the same additives normally used to make satisfactory motor oils with Polymer A except containing 40 %wt less ashless dispersant. A 10W40 motor oil was formulated using 1.1 %wt of the DVII from Example 1, the DI package containing the reduced level of ashless dispersant and the two base oils at the correct ratio to meet the 10W specification. The ability of this oil to satisfy the engine cleanliness requirements was tested in the Sequence VE engine test for sludge, varnish and wear. The following results were obtained.

| Sequence VE Test Results | | |
|---|---|---|
| Test Item | Result | Pass/Fail Spec |
| Average engine sludge | 9.34 | P/F 9.0 min |
| Rocker Arm Cover Sludge | 8.42 | P/F 7.0 min |
| Average Engine Varnish | 5.82 | P/F 5.0 min |
| Piston Skirt Varnish | 6.54 | P/F 6.5 min |
| Average Cam Wear (µm) | 17 | P/F 130 max |
| Maximum Cam Wear (µm) | 28 | P/F 380 max |

The composition of the present invention achieved an average engine sludge rating of 9.34 wherein the pass/fail minimum was 9.0 for the test. Similarly, the composition of the present invention exceeded the minima for the rocker arm cover sludge, average engine varnish, and piston skirt varnish aspects of the test. The average cam wear and maximum cam wear aspects of the test were passed by a wide margin. These results demonstrate that in oils containing a DVII according to the present invention, at least 40 %wt less ashless dispersant is required to meet engine cleanliness performance than is required in oils using a non-dispersant VII.

### Example 10

The reduction in ashless dispersant which is allowed by use of the DVII of the present invention not only brings an economic advantage by reducing the cost for ashless dispersant, but it also provides for improved fuel economy, in the inventive formulations. To demonstrate that the reduction in ashless dispersant brings an improvement in fuel economy, another formulation was prepared like Example 7 except the base oil ratio was adjusted to give a 5W30 oil. That is, it contained 1.1 %wt of the DVII from Example 1 and the same amount of the proprietary DI package that is normally required for use with the non-dispersant VII Polymer A except containing 40 %wt less of the ashless dispersant. Fuel economy was measured using the industry standard Sequence VIA test.

In the Sequence VIA test, the test sample is measured against a standard reference oil and the Effective Fuel Economy Improvement (EFEI) is measured. The table below shows the standard minimum requirement for SAE 10W30, 5W30, and 0W20 oils as well as the two tests which were performed on 5W30 oils using the dispersant VII block copolymer of the present invention.

| Sequence VIA Results | |
|---|---|
| SAE 10W-30 oils | 0.5 % EFEI (min standard) |
| SAE 5W-30 oils | 1.1 % EFEI (min standard) |
| SAE OW-20 oils | 1.4 % EFEI (min standard) |
| Invention 5W-30 | 1.42 % EFEI (actual) |
| Repeat Invention 5W-30 | 1.51 % EFEI (actual) |

The first three rows in the table show the standards in increasing level of performance. In other words, the lowest level of performance is for 10W-30 oils, then 5W-30 oils, and finally 0W-20 oils. It can be seen from reviewing the test results in the fourth and fifth rows of the table that the composition of the present invention exceeded the standard for fuel economy for the equivalent 5W-30 oils and also exceeded the standard fuel economy test at the next highest level of performance (for 0W-20 oils). These results show that the reduction in ashless dispersant allowed by the use of the DVII of the present invention does indeed provide the additional advantage of improved fuel economy.

The use of the inventive DVII allows the formulator to reduce the normal ashless dispersant treat rate by at least about forty percent. The reduction in ashless dispersant content, provided by the inventive DVII, allows for the use of more base stock of lower volatility. This is increasingly important as engine oils of reduced volatility are important to protect the engine's catalytic converter, leading to lower emissions into the environment. Further these same formulations, using the inventive DVII, provide for formulations with greatly increased fuel economy, as a result of lower ashless dispersant contents in the formulations. Finally, it is known by those skilled in the art that not all DVII polymers impart all of these benefits to the formulated engine oil.

## Claims

1. A dispersant viscosity index improver linear diblock copolymer or radial or star block copolymer, wherein the linear diblock copolymer and each arm of the radial or star block copolymer, respectively, has an overall number average molecular weight of 7500 to 250,000 and comprises a block of a conjugated diene having a number average molecular weight of 5000 to 200,000 and a block of a vinyl aromatic hydrocarbon having a number average molecular weight of 2500 to 100,000, the copolymer having a vinyl aromatic hydrocarbon content of 5 to 50 weight percent, wherein 5 to 10 N-vinyl imidazole functional groups per polymer chain have been grafted on to the copolymer.

2. The copolymer according to claim 1 wherein the diene is isoprene and the vinyl aromatic hydrocarbon is styrene.

3. The copolymer according to claim 2 wherein the overall molecular weight of the linear diblock copolymer and of each arm of the radial or star block copolymer, respectively, is 70,000 to 130,000, the polyisoprene block molecular weight is 40,000 to 80,000, the polystyrene block molecular weight is 20,000 to 50,000, and the polystyrene content is 20 %wt to 40 %wt.

4. A blend of at least two different copolymers according to claim 1, 2 or 3.

5. A blend of at least one linear diblock copolymer according to claim 1, 2 or 3 and at least one radial or star block copolymer according to claim 1, 2 or 3.

6. A process for producing a dispersant viscosity index improver comprising grafting N-vinylimidazole on to a linear diblock copolymer, a radial or star block copolymer, or a mixture of such copolymers, wherein the or each linear diblock copolymer and each arm of the or each radial or star block copolymer, respectively, has an overall number average molecular weight of 7500 to 250,000 and comprises a block of a conjugated diene having a number average molecular weight of 5000 to 200,000 and a block of a vinyl aromatic hydrocarbon having a number average molecular weight of 2500 to 100,000, the or each copolymer having a vinyl aromatic hydrocarbon content of 5 to 50 weight percent, wherein the grafting functionalization is performed in a device capable of imparting high mechanical energy, is performed in the presence of between 0% and 15% by weight, based on the amount of base copolymer, of a diluent oil, and sufficient N-vinylimidazole is used so that from 5 to 10 N-vinylimidazole functional groups per polymer chain are grafted on to the copolymer.

7. The process according to claim 6 wherein the functionalization is performed in the presence of 0.05 to 0.50 wt% based on the copolymer of a free radical initiator.

8. The process according to claim 7 wherein the free radical initiator is selected from the group consisting of benzoyl peroxide, t-butyl peroxypivalate,
2,4-dichlorobenzoyl peroxide, decanoylperoxide, propionyl peroxide, hydroxyheptyl peroxide, cyclohexanone peroxide, t-butylperbenzoate, dicumyl peroxide, lauroyl peroxide, t-butyl hydroperoxide,
2,2-azobis(2-methylpropionitrile),
2,2-azobis(2-methylvaleronitrile),
4,4'-azobis(4-cyanovaleric acid), di-t-butylperoxide,
1,1-bis(t-butylperoxy)-3,3,5-trimethylcyclohexane, t-butylcumylperoxide, and 2,5-dimethyl-2,5-di(t-butylperoxy)hexane.

9. A lubricating oil composition comprising:
(a) 0.01 to 10 percent by weight of a dispersant viscosity index improver copolymer according to claim 1, 2 or 3 or a blend according to claim 4 or 5;
(b) 5 to 20 percent by weight of a dispersant inhibitor package comprising an ashless dispersant; and
(c) 80 to 95 percent by weight of one or more base oils.

10. An additive concentrate comprising an inert carrier fluid and 10 to 80 percent by weight of a dispersant viscosity index improver copolymer according to claim 1, 2 or 3 or a blend according to claim 4 or 5.

## Patentansprüche

1. Lineares Diblockcopolymer- oder radiales oder Sternblockcopolymer-Dispergiermittel/Viskositätsindexverbesserungsmittel, bei dem das lineare Diblockcopolymer bzw. jeder Arm des radialen oder Sternblockcopolymers ein durchschnittliches Gesamtmolekulargewicht (Zahlenmittel) von 7.500 bis 250.000 hat und einen Block eines konjugierten Diens mit einem durchschnittlichen Molekulargewicht (Zahlenmittel) von 5.000 bis 200.000 und einen Block eines vinylaromatischen Kohlenwasserstoffs mit einem durchschnittlichen Molekulargewicht (Zahlenmittel) von 2.500 bis 100.000 enthält, wobei das Copolymer einen Gehalt an vinylaromatischem Kohlenwasserstoff von 5 bis 50 Gew.-% aufweist und 5 bis 10 funktionelle N-Vinylimidazolgruppen pro Polymerkette auf das Copolymer gepfropft sind.

2. Copolymer nach Anspruch 1, bei dem das Dien Isopren und der vinylaromatische Kohlenwasserstoff Styrol ist.

3. Copolymer nach Anspruch 2, bei dem das Gesamtmolekulargewicht des linearen Diblockcopolymers bzw. jedes Arms des radialen oder Sternblockcopolymers 70.000 bis 130.000 ist, das Molekulargewicht des Polyisoprenblocks 40.000 bis 80.000 ist, das Molekulargewicht des Polystyrolblocks 20.000 bis 50.000 ist und der Polystyrolgehalt 20 Gew.-% bis 40 Gew.-% beträgt.

4. Gemisch von mindestens zwei unterschiedlichen Copolymeren gemäß Anspruch 1, 2 oder 3.

5. Gemisch von mindestens einem linearen Diblockcopolymer gemäß Anspruch 1, 2 oder 3 und mindestens einem radialen oder Sternblockcopolymer gemäß Anspruch 1, 2 oder 3.

6. Verfahren zur Herstellung eines Dispergiermittels/Viskositätsindexverbesserungsmittels, bei dem N-Vinylimidazol auf lineares Diblockcopolymer, radiales oder Sternblockcopolymer oder eine Mischung dieser Copolymere aufgepfropft wird, wobei das oder jedes lineare Diblockcopolymer bzw. jeder Arm des oder jedes radialen oder Sternblockcopolymers ein durchschnittliches Gesamtmolekulargewicht (Zahlenmittel) von 7.500 bis 250.000 hat und einen Block eines konjugierten Diens mit einem Molekulargewicht (Zahlenmittel) von 5.000 bis 200.000 und einen Block eines vinylaromatischen Kohlenwasserstoffs mit einem durchschnittlichem Molekulargewicht (Zahlenmittel) von 2.500 bis 100.000 enthält, wobei das oder jedes Copolymer einen Gehalt an vinylaromatischem Kohlenwasserstoff von 5 bis 50 Gew.-% aufweist, die Pfropffunktionalisierung in einer Vorrichtung, die in der Lage ist, hohe mechanische Energie zu übertragen, und in der Gegenwart von 0 Gew.-% bis 15 Gew.-% Verdünnungsöl, bezogen auf die Menge von Basiscopolymer, durchgeführt wird und ausreichend N-Vinylimidazol verwendet wird, so dass 5 bis 10 funktionelle N-Vinylimidazolgruppen pro Polymerkette auf das Copolymer gepfropft werden.

7. Verfahren nach Anspruch 6, bei dem die Funktionalisierung in der Gegenwart von 0,05 bis 0,50 Gew.-% radikalischem Initiator, bezogen auf das Copolymer, durchgeführt wird.

8. Verfahren nach Anspruch 7, bei dem der radikalische Initiator aus der Gruppe ausgewählt ist, die aus Benzoylperoxid, tert.-Butylperoxypivalat, 2,4-Dichlorbenzoylperoxid, Decanoylperoxid, Propionylperoxid, Hydroxyheptylperoxid, Cyclohexanonperoxid, tert.-Butylperbenzoat, Dicumylperoxid, Lauroylperoxid, tert.-Butylhydroperoxid, 2,2-Azobis(2-methylpropionitril), 2,2-Azobis(2-methylvaleronitril), 4,4'-Azo-bis(4-cyanovaleriansäure), Di-tert.-butylperoxid, 1,1-Bis-(tert.-butylperoxy)-3,3,5-trimethylcyclohexan, tert.-Butylcumylperoxid und 2,5-Dimethyl-2,5-di(tert.-butylperoxy) hexan besteht.

9. Schmierölzusammensetzung, die
(a) 0,01 bis 10 Gew.-% eines Dispergiermittel/Viskositätsindexverbesserungsmittel-Copolymers gemäß Anspruch 1, 2 oder 3 oder ein Gemisch gemäß Anspruch 4 oder 5,
(b) 5 bis 20 Gew.-% Dispergiermittel/Inhibitor-Paket, das ein aschefreies Dispergiermittel enthält, und
(c) 80 bis 95 Gew.-% eines oder mehrerer Basisöle enthält.

10. Additivkonzentrat, das eine inerte Trägerflüssigkeit und 10 bis 80 Gew.-% eines Dispergiermittel/Viskositätsindexverbesserungsmittel-Copolymers gemäß Anspruch 1, 2 oder 3 oder ein Gemisch gemäß Anspruch 4 oder 5 enthält.

## Revendications

1. Copolymère diséquencé linéaire ou copolymère séquencé radial ou en étoile servant de dispersant-améliorant d'indice de viscosité, ledit copolymère diséquencé linéaire et chaque branche du copolymère séquencé radial ou en étoile, respectivement, ayant une moyenne en nombre du poids moléculaire totale de 7500 à 250 000 et comprenant un bloc d'un diène conjugué ayant une moyenne en nombre du poids moléculaire de 5000 à 200 000 et un bloc d'un hydrocarbure aromatique vinylique ayant une moyenne en nombre du poids moléculaire de 2500 à 100 000, le copolymère ayant une teneur en hydrocarbure aromatique vinylique de 5 à 50 pour cent en poids, 5 à 10 groupes fonctionnels N-vinylimidazole par chaîne polymère ayant été greffés sur le copolymère.

2. Copolymère suivant la revendication 1, dans lequel le diène est l'isoprène et l'hydrocarbure aromatique vinylique est le styrène.

3. Copolymère suivant la revendication 2, dans lequel le poids moléculaire total du copolymère diséquencé linéaire et de chaque branche du copolymère séquencé radial ou en étoile, respectivement, est compris dans l'intervalle de 70 000 à 130 000, le poids moléculaire du bloc polyisoprène est compris dans l'intervalle de 40 000 à 80 000, le poids moléculaire du bloc polystyrène est compris dans l'intervalle de 20 000 à 50 000 et la teneur en polystyrène est comprise dans l'intervalle de 20 % en poids à 40 % en poids.

4. Mélange d'au moins deux copolymères différents suivant la revendication 1, 2 ou 3.

5. Mélange d'au moins un copolymère diséquencé linéaire suivant la revendication 1, 2 ou 3 et d'au moins un copolymère séquencé radial ou en étoile suivant la revendication 1, 2 ou 3.

6. Procédé pour la production d'un dispersant-améliorant d'indice de viscosité, comprenant le greffage de N-vinylimidazole sur un copolymère diséquencé linéaire, un copolymère séquencé radial ou en étoile ou un mélange de tels copolymères, dans lequel le ou chaque copolymère diséquencé linéaire et chaque branche du ou de chaque copolymère séquencé radial ou en étoile, respectivement, a une moyenne en nombre du poids moléculaire totale de 7500 à 250 000 et comprend un bloc d'un diène conjugué ayant une moyenne en nombre du poids moléculaire de 5000 à 200 000 et un bloc d'un hydrocarbure aromatique vinylique ayant une moyenne en nombre du poids moléculaire de 2500 à 100 000, le ou chaque copolymère ayant une teneur en hydrocarbure aromatique vinylique de 5 à 50 pour cent en poids, la fonctionnalisation par greffage étant effectuée dans un dispositif capable de fournir une énergie mécanique intense, en présence de 0 % à 15 % en poids, sur la base de la quantité du copolymère de base, d'une huile diluante, et on utilise une quantité de N-vinylimidazole suffisante pour que 5 à 10 groupes fonctionnels N-vinylimidazole par chaîne polymère soient greffés sur le copolymère.

7. Procédé suivant la revendication 6, dans lequel la fonctionnalisation est effectuée en présence de 0,05 à 0,50 pour cent en poids, sur la base du copolymère, d'un initiateur radicalaire.

8. Procédé suivant la revendication 7, dans lequel l'initiateur radicalaire est choisi dans le groupe consistant en le peroxyde de benzoyle, le peroxypivalate de tertio-butyle, le peroxyde de 2,4-dichlorobenzoyle, le peroxyde de décanoyle, le peroxyde de propionyle, le peroxyde d'hydroxyheptyle, le peroxyde de cyclohexanone, le perbenzoate de tertio-butyle, le peroxyde de dicumyle, le peroxyde de lauroyle, l'hydroperoxyde de tertio-butyle, le 2,2-azobis(2-méthylpropionitrile), le 2,2-azobis(2-méthylvaléronitrile), le 4,4'-azobis(4-cyanovalérique), le peroxyde de di-tertio-butyle, le 1,1-bis(tertiobutylperoxy)-3,3,5-triméthylcyclohexane, le peroxyde de tertio-butylcumyle et le 2,5-diméthyl-2,5-di(tertiobutylperoxy)hexane.

9. Composition d'huile lubrifiante comprenant :
(a) 0,01 à 10 pour cent en poids d'un copolymère dispersant-améliorant d'indice de viscosité suivant la revendication 1, 2 ou 3 d'un mélange suivant la revendication 4 ou 5 ;
(b) 5 à 20 pour cent en poids d'une formulation d'inhibiteur-dispersant comprenant un dispersant sans cendre ; et
(c) 80 à 95 pour cent en poids d'une ou plusieurs huiles de base.

10. Concentré d'additif, comprenant un fluide inerte servant de véhicule et 10 à 80 pour cent en poids d'un copolymère dispersant-améliorant d'indice de viscosité suivant la revendication 1, 2 ou 3 ou d'un mélange suivant la revendication 4 ou 5.
